# EUROPÄISCHE PATENTSCHRIFT

(11) **EP 1 988 216 B1**
(45) Veröffentlichungstag und Bekanntmachung des Hinweises auf die Patenterteilung: **05.05.2010**
(21) Anmeldenummer: 08003763.3
(22) Anmeldetag: 29.02.2008
(51) Int. Cl.: E02B 8/08

(54) **Fischauf- oder -abstiegseinrichtung**
Fish upstream/downstream migration device
Dispositif d'ascension ou de descente de poissons

(30) Priorität: 04.05.2007 DE 102007020872
(43) Veröffentlichungstag der Anmeldung: 05.11.2008
(73) Patentinhaber: Universität Kassel, 34125 Kassel (DE)
(72) Erfinder: Hassinger, Reinhard, Dr., 34317 Habichtswald (DE)
(74) Vertreter: Walther, Walther & Hinz GbR

(56) Entgegenhaltungen:
- WO-A-03/062535
- US-A- 2 683 969

## Beschreibung

Die vorliegende Erfindung betrifft eine Fischauf- oder -abstiegseinrichtung, wobei die Einrichtung einen Fischpass umfasst, wobei der Fischpass ein Auslaufgerinne zum Unterwasser aufweist, wobei eine wasserführende Verbindung in Form eines Kanal- oder Rohrabschnittes zwischen dem Unterwasser und dem Auslaufgerinne der Fischauf- oder -abstiegseinrichtung vorgesehen ist, wobei die Verbindung seitlich in das Auslaufgerinne mündet, wobei im Übergang vom Unterwasser zum Auslaufgerinne mindestens eine hydraulisch arbeitende Wasserpumpe vorgesehen ist, wobei die hydraulisch arbeitende Wasserpumpe eine Lockstromdüse umfasst.

Ein Fischpass ist eine Vorrichtung, die es Fischen ermöglicht, bei einer Wehreinrichtung, mit beispielsweise einem Wasserkraftwerk, vom Unterwasser in das Oberwasser zu gelangen oder umgekehrt. Insbesondere bei einem Wehr mit einem Wasserkraftwerk ist zu beobachten, dass der Wasserstrom zu dem Unterwasser aus dem Wasserkraftwerk ein wesentlich höheres Volumen aufweist als der Wasserstrom in dem Gerinne, das als Fischpass dienen soll. Der Grund hierfür liegt im Wesentlichen darin begründet, dass möglichst viel Wasser durch das Wasserkraftwerk geleitet werden soll, um eine möglichst hohe Ausbeute an Energie zu erzielen. Nun ist allerdings bekannt, dass Fische bei ihren Wanderungen primär von der Strömung geleitet werden (Rheotaxis), so dass sie immer bestrebt sind, in dem Gewässer aufzusteigen, wo vermeintlich der größte Durchfluss vorherrscht. Dies ist - wie bereits ausgeführt - naturgemäß nicht das Gerinne, das als Fischpass dient, sondern vielmehr der Auslauf des Wasserkraftwerkes. Das bedeutet, dass ein Großteil der Fische den Fischpass nicht oder nur schwerlich finden wird.

Wie bereits an anderer Stelle ausgeführt, besteht nun die Möglichkeit, in den Fischpass eine größere Menge Wasser vom Oberwasser einzuleiten, was allerdings die Leistungsausbeute des Wasserkraftwerks vermindert. Selbst wenn man hiervon absieht, würde bei einer unmittelbaren Einleitung von Oberwasser in den Fischpass auf Grund der geodätischen Höhendifferenz mit erheblichen Wasserturbulenzen im Bereich des Fischpasses zu rechnen sein. Der durch die zusätzliche Wassermenge für manche Fischarten insofern erzeugte Lockeffekt wirkt allerdings für verschiedene andere Fischarten auf Grund der Turbulenzen abschreckend. Darüber hinaus besteht immer die Gefahr, dass die Fließgeschwindigkeit auf Grund des zusätzlichen Durchflusses derart hoch ist, dass die Fische nicht in der Lage sind, die Gegenströmung zum Aufstieg im Fischpass zu überwinden.

Aus dem druckschriftlichen Stand der Technik ist gemäß der US 2,683,969 eine Vorrichtung zur Erzeugung eines Lockstromes nach Art einer Wasserstrahlpumpe bekannt. Hierbei ist im Fischpass ein trichterförmiger Einlass vorgesehen, wobei sich an den trichterförmigen Einlass ein rechteckiges Rohr anschließt, wobei das rechteckige Rohr in ein Gehäuse der Wasserstrahlpumpe mündet. In dieses längliche Gehäuse mündet senkrecht zur Längsachse des Gehäuses eine weitere Leitung aus dem Oberwasser, wobei endseitig, und zwar in Achsrichtung zu dem rechteckigen Rohr, die Rohrleitung abgeht, die gleichfalls bis in das Oberwasser reicht. Im Bereich des Übergangs von dem rechteckigen Rohr zu dem Gehäuse befindet sich eine radiale Öffnung, durch die Wasser aus dem Unterwasser einströmen kann, da sich dieses Gehäuse im Unterwasser befindet. Sinn und Zweck dieser Vorrichtung ist, im Bereich des trichterförmigen Auslasses eine hohe Strömung zu erzeugen, um dadurch Fische zum Aufstieg zu locken. Allerdings ist kaum zu erwarten, dass die Fische den Aufstieg durch die dort dargestellten Rohrleitungen schlussendlich bewerkstelligen können. Dies liegt allein bereits daran, dass die Fische kaum in der Lage sein werden, die Turbulenzen am Austritt zu überwinden. Darüber hinaus ist mehr als fraglich, ob Fische tatsächlich einen Durchlass über mehrere Meter durch geschlossene Rohrleitungen durchführen. Insofern ist auch nicht bekannt, wo eine solche Vorrichtung zum Einsatz gekommen wäre.

Der Erfindung liegt daher die Aufgabe zu Grunde, die Leitstromrichtung an einem Fischpassauflauf so zu verstärken, dass verschiedene Bedingungen erfüllt sind:

So soll am Fischeinstieg ein möglichst großer Durchfluss verherrschen, dessen Geschwindigkeit etwas größer als die in der Hauptströmung sein soll. Innerhalb dieser Lockströmung soll die Turbulenz das natürliche Maß nicht überschreiten. Der hier gewünschte Durchfluss soll allerdings nur zu einem kleinen Teil aus dem Oberwasser genommen werden, um die Leistung eines Wasserkraftwerks nicht allzu stark zu beeinträchtigen.

Die Aufgabe wird mit Hilfe einer Fischauf- oder -abstiegseinrichtung der eingangs genannten Art gelöst, bei der die Lockstromdüse derart vor dem Kanal- oder Rohrabschnitt angeordnet ist, dass die Achse des Strahls aus der Lockstromdüse mit der Mittelängsachse einer Venturidüse im Kanal- oder Rohrabschnitt fluchtet, und dass der Querschnitt des Freistrahls der Lockstromdüse in etwa dem geringsten Querschnitt in der Venturidüse des Kanal- oder Rohrabschnitts entspricht.

Das heißt, dass vom Unterwasser z. B. eines Wasserkraftwerks zum Auslaufgerinne des Fischpasses eine wasserführende Querverbindung geschaffen wird, in der mindestens eine hydraulisch arbeitende Wasserpumpe vorgesehen ist. Eine solche hydraulisch arbeitende Wasserpumpe arbeitet nach dem Prinzip der Wasserstrahlpumpe. Diese Wasserstrahlpumpe befindet sich im Unterwasser des Wehres oder des Wasserkraftwerkes und zwar im Bereich des Übergangs vom Unterwasser zum Gerinne des Fischpasses. Das heißt, durch die hydraulisch arbeitende Wasserpumpe wird Wasser aus dem Unterwasser in das Auslaufgerinne des Fischpasses hineingedrückt. Hieraus wird deutlich, dass mit einer relativ geringen Wassermenge zum Betrieb der Wasserstrahlpumpe, z. B. durch eine Lockstromleitung aus dem Oberwasser, im Auslaufgerinne, also im Bereich des Fischeinstiegs im Unterwasser, eine im Verhältnis große Wassermenge bereitgestellt werden kann, die als Lock- oder Leitströmung die Fische dann bewegt, im Fischpass aufzusteigen, ohne dass der Wirkungsgrad, z. B. eines Wasserkraftwerks, beeinträchtigt wird.

Hierbei ist vorgesehen, dass die wasserführende Verbindung einen Kanal-oder Rohrabschnitt aufweist, wobei der Kanal- oder Rohrabschnitt innen nach Art einer Düse, insbesondere nach Art einer Venturidüse ausgebildet ist. Durch eine solche Venturidüse wird die Wirkung der hydraulisch arbeitenden Wasserpumpe verstärkt. Dies gilt insbesondere vor folgendem Hintergrund:
Der Wasserstand im Auslaufgerinne des Fischpasses ist geringfügig höher als der im Unterwasser. Dies liegt im Wesentlichen darin begründet, dass im Bereich des Auslaufgerinnes des Fischpasses das Wasserspiegelgefälle größer ist als im Hauptgerinne, und dass der Fließweg durch das Auslaufgerinne länger ist als im Unterwasser des Wehres oder der Wasserkraftanlage. Das heißt, dass die hydraulisch arbeitende Wasserpumpe gegen einen geringen Überdruck an arbeitet. Durch die Anordnung der Venturidüse vor der Düse der Wasserstrahlpumpe wird nun erreicht, dass trotz eines solchen Gegendrucks noch genügend Wasser in das Auslaufgerinne gefördert wird.

Im Einzelnen ist in diesem Zusammenhang des Weiteren vorgesehen, dass die hydraulisch arbeitende Wasserpumpe eine Lockstromdüse umfasst, wobei die Lockstromdüse derart vor dem Kanal- oder Rohrabschnitt angeordnet ist, dass die Achse des Strahls aus der Lockstromdüse mit der Mittellängsachse der Venturidüse im Kanal- oder Rohrabschnitt fluchtet, und dass der Querschnitt des Freistrahls der Lockstromdüse in etwa dem geringsten Querschnitt in der Venturidüse des Kanal- oder Rohrabschnitts entspricht. Dadurch, dass der Freistrahl der Lockstromdüse den geringsten Querschnitt der Venturidüse im Wesentlichen abdeckt, wird Zweierlei erreicht:
Zum einen wird verhindert, dass auch bei etwas höherem Überdruck auf Grund eines höheren Wasserstandes auf der Auslaufgerinneseite Wasser in das Unterwasser unmittelbar nach, z. B. dem Wasserkraftwerk, zurückfließt. Zum anderen wird verhindert, dass Fische in den Kanal- oder Rohrabschnitt einschwimmen. Dies deshalb, weil die Turbulenzen in oder unmittelbar nach dem Kanal- oder Rohrabschnitt auf der Seite des Auflaufgerinnes zu hoch sind.

Vorteilhafte Merkmale und Ausgestaltungen der Erfindung sind den Unteransprüchen zu entnehmen.

Nach einem weiteren Merkmal der Erfindung ist allerdings vorgesehen, dass der Kanal- oder Rohrabschnitt mit Abstand in das Auslaufgerinne mündet. Das bedeutet, dass zwar unmittelbar nach dem Kanal- oder Rohrabschnitt mit der Venturidüse eine erhöhte Turbulenz festzustellen ist, die ein Einschwimmen der Fische verhindert, dass diese Turbulenzen aber bereits im Auslaufgerinne im Wesentlichen abgebaut worden sind, so dass die Fische im Auslaufgerinne von derartigen Turbulenzen nicht in ihrem Aufstieg gestört werden.

Anhand der Zeichnungen wird die Erfindung nachstehend beispielhaft näher erläutert.

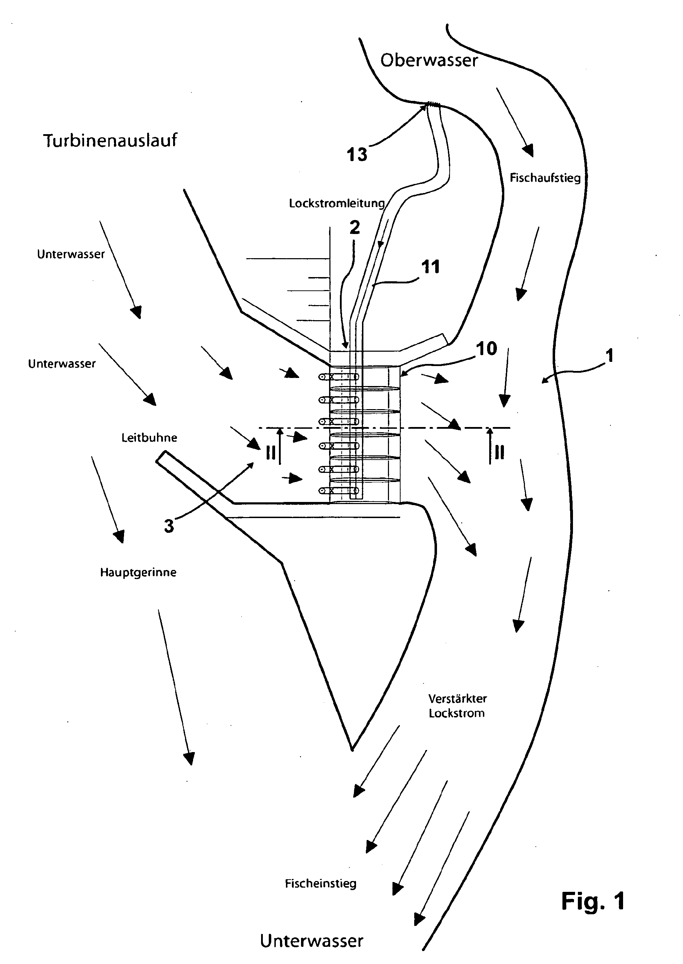

- Figur 1: zeigt die Anordnung des Fischpasses in Verbindung mit einer Batterie hydraulisch arbeitender Wasserpumpen im Übergang vom Unterwasser nach dem Turbinenauslauf zum Gerinne des Fischpasses;
- Figur 2: zeigt einen Schnitt gemäß der Linie II - II aus Figur 1;
- Figur 3: zeigt einen Schnitt gemäß der Linie III - III aus Figur 2.

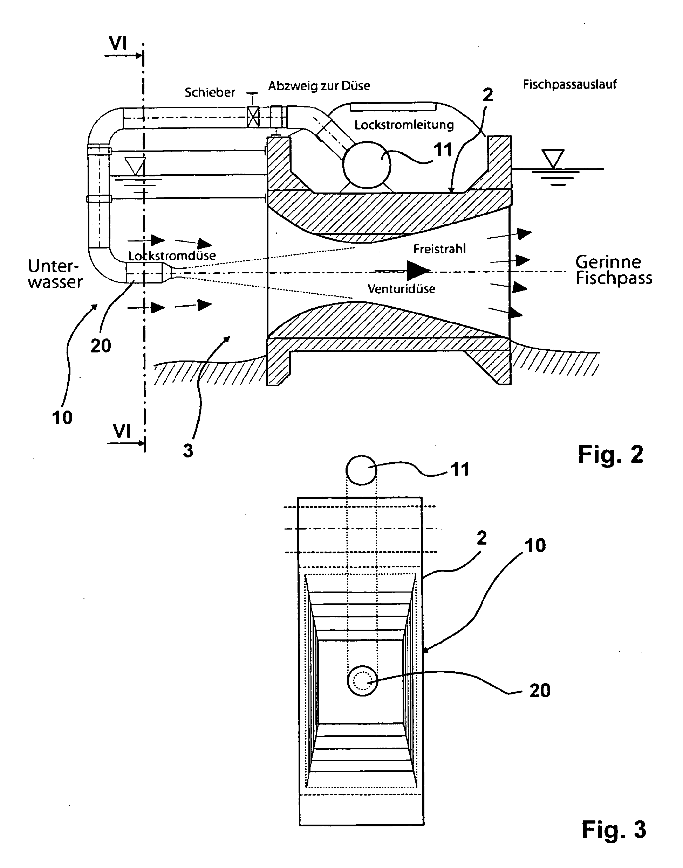

Das Gerinne 1 des Fischpasses verbindet das Oberwasser mit dem Unterwasser im Bereich einer Wehranlage bzw. auch eines Wasserkraftwerkes. Das Gerinne 1 ist das Nebengerinne im Verhältnis zum sogenannten Hauptgerinne, das den Wasserstrom nach dem Turbinenauslauf des Wasserkraftwerks darstellt. Der Wasserstrom nach dem Turbinenauslauf stellt ebenfalls das sogenannte Unterwasser dar. Das Gerinne 1 und das Unterwasser nach dem Turbinenauslauf sind durch eine wasserführende Verbindung 3 miteinander verbunden, wobei die Verbindung 3 einen geschlossenen Kanal- oder Rohrabschnitt 2 aufweist. Vor dem Kanal- oder Rohrabschnitt 2 ist eine Batterie von sechs hydraulisch arbeitenden Wasserpumpen 10 vorgesehen, wobei die Versorgung der Wasserpumpen 10 durch die sogenannte Lockstromleitung 11 erfolgt, die den Wasserpumpen Wasser vom Oberwasser zuführt. Dieses Wasser aus dem Oberwasser hat auf Grund der geodätischen Höhendifferenz eine nicht unerhebliche Energie. Die sechs Wasserpumpen bestehen - wie sich dies im Einzelnen aus Figur 2 ergibt - aus einer Lockstromdüse 20, die sich im Bereich des Unterwassers nach dem Turbinenauslauf im Bereich des Kanalabschnitts, und hier unmittelbar in Flussrichtung vor dem Kanalabschnitt, befindet. Diese Lockstromdüse 20 befördert eine gewisse Wassermenge mit einer bestimmten Strahlgeschwindigkeit, die abhängig ist von der Energie des durch die Lockstromleitung zugeführten Oberwassers und damit unmittelbar abhängig ist von der geodätischen Höhendifferenz, in das Auslaufgerinne 1. Durch die hohe Strömungsgeschwindigkeit des aus der Lockstromdüse 20 austretenden Wasserstrahls wird eine erhebliche Menge des umgebenden Wassers angesaugt und mit in das Auslaufgerinne des Fischpasses befördert.

In dem Kanal- oder Rohrabschnitt 2 befindet sich eine weitere Düse, die nach Art einer Venturidüse ausgebildet ist. Das heißt, der Auslass der Lockstromdüse 20 befindet sich im Bereich des Eingangs des Kanal- oder Rohrabschnitts in Fluchtachse zu der Venturidüse, wobei die Strahlaufweitung des Strahls der Lockstromdüse im Bereich des engsten Querschnitts der Venturidüse etwa dem Querschnitt der Venturidüse dort entspricht. Hierdurch wird zum einen erreicht, dass die Fische auf Grund der hierbei entstehenden hohen Strömungsgeschwindigkeit und der entsprechenden Turbulenzen nicht in den Kanalabschnitt 2 mit der Venturidüse schwimmen. Die durch die Venturidüse erzeugten Turbulenzen beruhigen sich nach dem Kanalabschnitt relativ zügig; dies u. a. deshalb, weil der Wasserstand im Auslaufgerinne für den Fischpass etwas höher ist als im Unterwasser, von wo aus durch die Lockstromdüse 20 das Wasser in das Auslaufgerinne des Fischpasses befördert wird, und weil in der Venturidüse durch die Wiederaufweitung des Querschnitts die Strömungsgeschwindigkeit durch Querschnittszunahme reduziert wird.

Zum anderen verhindert diese Anordnung der Lockstromdüse vor der Venturidüse derart, dass der Querschnitt des Strahles der Lockstromdüse in etwa dem Querschnitt der Venturidüse an der geringsten Stelle entspricht auch, dass kein Wasser aus dem Auslaufgerinne des Fischpasses in das Unterwasser zurückläuft, was ansonsten u. U. der Fall wäre, wenn der Wasserstand im Auslaufgerinne 1 einen bestimmten Wert relativ zum Unterwasser überschreitet.

Durch die erfindungsgemäße Verstärkung des Durchflusses im Auslaufgerinne des Fischpasses ist es möglich, den Lockstrom um mindestens den Faktor 10 zu vergrößern, wodurch die Wahrscheinlichkeit, dass Fische den Einstieg finden, ebenso vergrößert wird.

Durch den Einlauf 13 der Lockstromleitung 11 im Oberwasser wird im Einlaufbereich des Fischpasses durch den hierbei entstehenden Sog ebenfalls eine Lockwirkung für absteigende Fische erzeugt, so dass ein Lock- oder Leitstrom sowohl im Oberwasser des Fischpasses als auch im Unterwasser im Bereich des Auslaufgerinnes des Fischpasses bereitgestellt wird.

## Patentansprüche

1. Fischauf- oder - abstiegseinrichtung, wobei die Einrichtung einen Fischpass umfasst, wobei der Fischpass ein Auslaufgerinne (1) zum Unterwasser aufweist, wobei eine wasserführende Verbindung (3) in Form eines Kanal- oder Rohrabschnittes (2) zwischen dem Unterwasser und dem Auslaufgerinne (1) der Fischauf- oder -abstiegseinrichtung vorgesehen ist, wobei die Verbindung seitlich in das Auslaufgerinne (1) mündet, wobei im Übergang vom Unterwasser zum Auslaufgerinne (1) mindestens eine hydraulisch arbeitende Wasserpumpe (10) vorgesehen ist, wobei die hydraulisch arbeitende Wasserpumpe (10) eine Lockstromdüse (20) umfasst,
**dadurch gekennzeichnet,**
**dass** die Lockstromdüse (20) derart vor dem Kanal- oder Rohrabschnitt (2) angeordnet ist, dass die Achse des Strahls aus der Lockstromdüse (20) mit der Mittellängsachse einer Venturidüse im Kanal- oder Rohrabschnitt (2) fluchtet, und dass der Querschnitt des Freistrahls der Lockstromdüse (20) in etwa dem geringsten Querschnitt in der Venturidüse des Kanal- oder Rohrabschnitts (2) entspricht.

2. Fischauf- oder -abstiegseinrichtung nach Anspruch 1,
**dadurch gekennzeichnet,**
**dass** die hydraulisch arbeitende Wasserpumpe (10) mit einem Wasserstrom aus dem Oberwasser versorgt wird.

3. Fischauf- oder -abstiegseinrichtung nach Anspruch 1,
**dadurch gekennzeichnet,**
**dass** der Kanal- oder Rohrabschnitt (2) mit Abstand in das Auslaufgerinne (1) mündet.

4. Fischauf- oder -abstiegseinrichtung nach Anspruch 1,
**dadurch gekennzeichnet,**
**dass** die hydraulisch arbeitende Wasserpumpe (10) nach Art einer Freistrahlpumpe ausgebildet ist.

5. Fischauf- oder -abstiegseinrichtung nach Anspruch 1,
**dadurch gekennzeichnet,**
**dass** die Lockstromleitung (11) das Wasser aus dem Einlaufbereich des Fischpasses im Oberwasser bezieht, um dort die Lockwirkung für absteigende Fische zu verstärken.

## Claims

1. Fish upstream/downstream migration device, wherein the device comprises a fish pass, wherein the fish pass has an outlet raceway (1) to the downstream water, wherein a water-conducting connection (3) in the form of a channel section or pipe section is provided between the tailwaters and the outlet raceway (1) of the fish upstream/downstream migration device, wherein the connection opens laterally into the outlet raceway (1), wherein at least one hydraulically operating water pump (10) is provided in the transition from the tailwaters to the outlet raceway (1) and wherein the hydraulically operating water pump (10) comprises a lock flow nozzle (20), **characterised in that** the lock flow nozzle (20) is so arranged in front of the channel section or pipe section (2) that the axis of the jet from the lock flow nozzle (20) is aligned with the centre longitudinal axis of a venturi nozzle in the channel section or pipe section (2), and that the cross-section of the free jet of the lock flow nozzle (20) approximately corresponds with the smallest cross-section in the venturi nozzle of the channel section or pipe section (2).

2. Fish upstream/downstream migration device according to claim 1, **characterised in that** the hydraulically operating water pump (10) is supplied with a water flow from the headwaters.

3. Fish upstream/downstream migration device according to claim 1, **characterised in that** the channel section or pipe sections (2) opens into the outlet raceway (1) at a spacing.

4. Fish upstream/downstream migration device according to claim 1, **characterised in that** the hydraulically operating water pump (10) is constructed in the manner of a free jet pump.

5. Fish upstream/downstream migration device according to claim 1, **characterised in that** the lock flow duct (11) draws the water from the inflow region of the fish pass in the headwaters so as to amplify there the lock effect for fish migrating downstream.

## Revendications

1. Dispositif d'ascension ou de descente de poissons comprenant une passe à poissons, dans lequel la passe à poissons présente un chenal de sortie (1) qui débouche dans l'eau d'aval, dans lequel une liaison hydraulique (3) qui a la forme d'un tronçon de conduit ou de tube (2) est prévue entre l'eau d'aval et le chenal de sortie (1) du dispositif d'ascension ou de descente des poissons, la liaison débouchant latéralement dans le chenal de sortie (1), dans lequel au moins une pompe à eau à fonctionnement hydraulique (10) est prévue dans le passage entre l'eau d'aval et le chenal de sortie (1), la pompe à eau à fonctionnement hydraulique (10) comprenant une buse de courant d'appel (20),
**caractérisée en ce que**
la buse de courant d'appel (20) est disposée en amont du tronçon de conduit ou de tube (2) de telle manière que l'axe du jet sortant de la buse de courant d'appel (20) est aligné avec l'axe longitudinal médian d'un tube de Venturi prévu dans le tronçon de conduit ou de tube (2) et que la section transversale du jet libre de la buse de courant d'appel (20) correspond à peu près à la section minimale du tube de Venturi du tronçon de conduit ou de tube (2).

2. Dispositif d'ascension ou de descente de poissons selon la revendication 1
**caractérisée en ce que**
la pompe à eau à fonctionnement hydraulique (10) est alimentée avec un courant d'eau provenant de l'eau d'amont.

3. Dispositif d'ascension ou de descente de poissons selon la revendication 1,
**caractérisée en ce que**
le tronçon de conduit ou de tube (2) débouche dans le chenal de sortie (1) à une certaine distance de ce chenal.

4. Dispositif d'ascension ou de descente de poissons selon la revendication 1,
**caractérisée en ce que**
la pompe à eau (10) à fonctionnement hydraulique est réalisée à la façon d'une pompe à jet libre.

5. Dispositif d'ascension ou de descente de poissons selon la revendication 1,
**caractérisée en ce que**
la conduite de courant d'appel (11) reçoit l'eau de la région de l'entrée de la passe à poissons dans l'eau d'amont pour renforcer l'effet d'appel pour les poissons descendants.
